# EUROPEAN PATENT APPLICATION

(11) **EP 2 043 008 A1**
(43) Date of publication of application: **01.04.2009**
(21) Application number: 07291160.5
(22) Date of filing: 26.09.2007
(51) Int. Cl.: G06F 17/30

(54) **System for synchronous delivery of annotated multimedia streams**

(71) Applicant: Alcatel Lucent, 75008 Paris (FR)
(72) Inventor: Hemmeryckx-Deleersnijder, Bart Karel, 9090 Melle (BE); van der Meerssche, Bart Frank Juliaan, B-3150 Wespelaar (BE); Bruynooghe, Bert, 9050 Gentbrugge (BE); Dacquin, Hendrik, 9000 Gent (BE); Vanparijs, Frieda, 1880 Kapelle-op-den-Bos (BE)
(74) Representative: Narmon, Gisèle Marie Thérèse

(57) **Abstract**

The system includes a media session annotation server adapted to receive content and to generate correlation information to correlate this content with a multimedia stream, a media vault adapted to store the multimedia stream, the correlation information and the content, a composition engine adapted to use the correlation information to annotate the multimedia stream with the content to provide an annotated multimedia stream and a streaming server adapted to stream the annotated multimedia stream to one or more users over a network. The streaming server, the media vault, the composition engine and the media session annonation server are part of the network. The users provide the media session annotation server with the content and with the multimedia stream and send out a control signal to control the media session annotation server in correlating the content with the multimedia stream.

## Description

The invention relates to a system for synchronous delivery of annotated multimedia streams according to the non-characteristic part of claim 1.

Such a system is known from the US patent 6,230,172. Therein a system is described wherein a designer via a producer module coupled to a network, generates annotated media streams that are stored in a stream server and are upon request streamed to a user connected to this network. Both the designer and the user are working in a PC environment.

The producer module consists of a capture module, the media vault in the subject invention, that is able to capture a multimedia stream and of an author module, the media session annotation server in the subject invention, that generates annotation streams with correlation information correlating the annotation stream with the multimedia stream. Both streams are stored in the stream server, the streaming server in the subject invention. Such a system has two drawbacks : there is no interactivity with the user, i.e. the user can not determine what annotations he/she would like to see applied, and the system is not realizable in a TV environment, where there is not enough local storage capacity to realize the producer module functionality.

It is the object of the invention to realize a system with the functionality of the above described system, but where the user also has designer possibilities and that is useable in a TV environment.

This objective is realized by means of the features described in the characteristic part of Claim 1. Indeed, by having the streaming server as well as the media vault, the composition engine and the media session annotation server not locally, i.e. where the user entity is located, but f.i. as part of a network server and by adapting the user module, f.i. a set-top box, to be able to provide the media session annotation server with the multimedia stream and with the content and to generate control signals to control the correlation of the media stream with the content in the media session annotation server, the annotation of the media stream with the content can be done in an interactive way by the user and without the need for local storage capacity since everything is realized via the media session annotation server.

The content and the media stream can be provided by the user either locally and via a audio/video reflector or from a prestored media stream and prestored content that is for instance stored in the media vault as specified in claims 2 to 5.

Thanks to the location of the different modules of the system in the network, introduction of a session server as in claim 13, enables annotation and viewing of the annotated stream by more than one user. Indeed different users can thanks to this session server generate a control signal and content for the same media stream via that session server, and the session server combines and manages these requests to generate a combined control signal for the media session annotation server and coordinate the annotation with the different content items.

An additional feature of the invention is described in claim 7, being the composition engine. This engine combines the stream with indications that additional content is available, and upon receipt of a control signal from the user overlays content on the running stream..

These and other advantages of the present invention will become apparent upon reading of the following detailed description of an implementation of the invention in combination with the figures where :
- Fig. 1 shows an implementation architecture of the subject system and
- Fig. 2 shows a time line of an example use of the subject system.

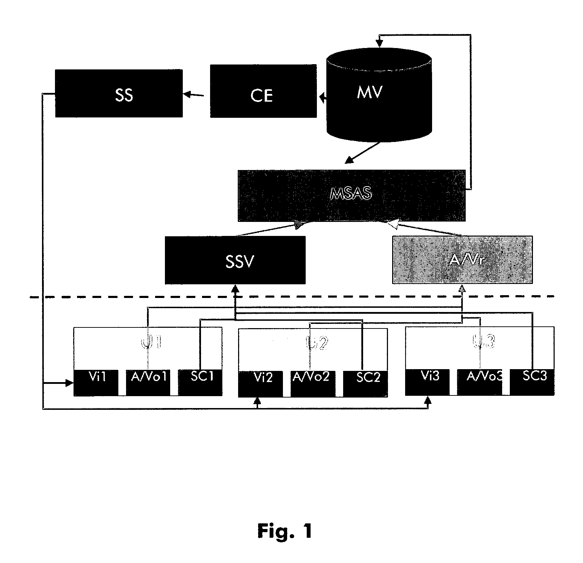

The architecture of Fig. 1 shows a streaming server SS connected via a network to 3 users U1, U2, U3 being Set-Top Box clients. The streaming server SS is via a composition engine CE connected to a media vault MV. C1, C2 and C3 contain a video-in part Vil, Vi2 and Vi3 respectively via which they receive multimedia streams from the streaming server. They also contain a Audio/Video out part respectively A/Vo1, A/Vo2 and A/Vo3 connected to an audio/video reflector ANr and session control parts SC1, SC2 and SC3 connected to a session server SSV. Both the session server and the audio/video reflector are via a media session annotation server MSAS connected to the media vault. MSAS, SS, CE, MV, A/Vr and SSV are part of an interactive TV platform that is part of the network.

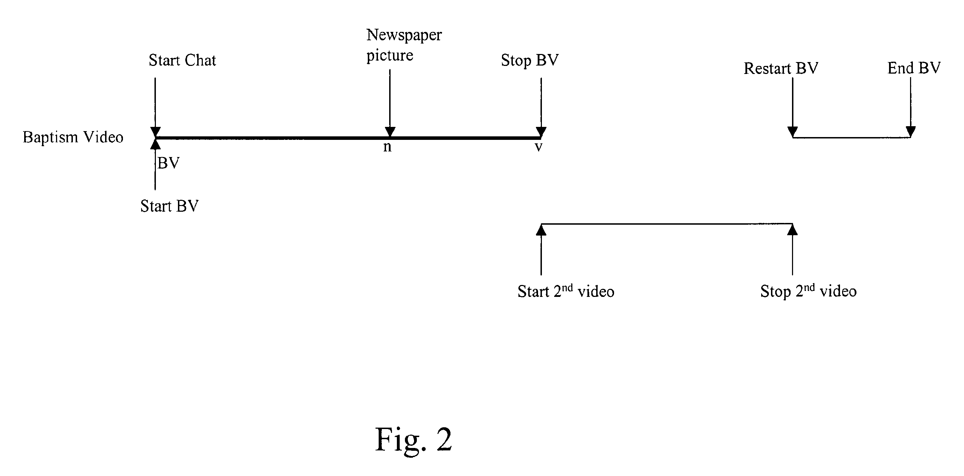

In order to explain how the system works, a use example of which the timeline is shown in Fig. 2 is described hereafter. U1 has made a video of his baby's baptism. The video is stored in MV and is streamed to U1, U2, being the parents of U1, and to U3, being the brother of U1. This is shown in Fig. 2 as the BV timeline. During the streaming of the video, U1, U2 and U3 are chatting. This conversation is by A/V1, A/V2 and A/V3 sent to ANr and is via MSAS recorded in the media vault. The start of the video and of the chat is by SC1, SC2 and SC3 via a control signal indicated to SSV. SSV combines the control signals and sends a resulting control signal to MSAS indicating that the incoming chat has to be correlated with the streamed video. MSAS records a time stamp indicating the start of the video and of the chat and a content tag that indicates the baptism video (BV). At a specific moment, U1 wants to inserts a picture of the baptism that appeared in a newspaper. A control signal is sent via SC1 to SSV and a copy of the picture is sent to ANr via A/Vo1 and is stored in MV. MSAS creates a time stamp and another content tag n to keep the link between the picture and the stream.

At another specific moment the video shows the baby crying and U3 wants to show a second video to illustrate a similar experience at his son's baptism. The baptism video is interrupted by U1 for a while to look at the video of U3. To do so, a control signal is sent by SC1 to SSV, and one from SC3 to indicate the start of the second video whilst the video is sent by A/Vo3 to A/Vr. Again SSV combines the control signals and sends the result to MSAS where a content tag v is created and a time stamp indicating the start of the second video and the interruption of the baptism video. Once the second video is terminated the first one is restarted by means of a new control signal from U1. This results in a new tag ev. The end of the baptism video and of the chat is indicated in a similar way by U1, U2 and U3 and is shown in Fig. 2 as ev and evcd.

All tags and related time stamps are stored in MV together with the baptism video, the chat, the newspaper picture and the second video.

Upon request, via a control signal, the annotated multimedia stream can then be streamed to any of the users for viewing or for further annotation. The tags are shown during the viewing and a choice is given to view the associated content being the newspaper picture if n is chosen or the second video is v is chosen. The choice is via SSV, MSAS and MV communicated to CE who directly, in real-time adapts the stream in SS accordingly.

Although the content is in this use case provided by the users, it can in an alternative embodiment also be content stored in the media vault and the control signal generated by the user can refer to this stored content.

In addition, the media stream can in an alternative embodiment initially be stored locally with the user and be provided to the media vault via the user's audi/video out part and via the audio video reflector.

Since it is estimated that the implementation of the different elements of the subject system is obvious for a person skilled in the art from the above functional description, this implementation is not described in details.

Also, while the principles of the invention have been set out above in connection with specific embodiments, it is to be clearly understood that this description is merely made by way of example and not as a limitation of the scope of protection which is determined by the appended claims.

## Claims

1. System for synchronous delivery of annotated multimedia streams over a network to a user (U1; U2; U3) connected to said network, said system including a media session annotation server (MSAS) adapted to receive content and to generate correlation information to correlate said content with a multimedia stream, a media vault (MV) adapted to store said multimedia stream, said correlation information and said content, a composition engine (CE) adapted to use said correlation information to annotate said multimedia stream with said content to provide said annotated multimedia stream and a streaming server (SSV) adapted to stream said annotated multimedia stream to said user (U1; U2; U3) over said network, **characterized in that** said streaming server (SSV), said media vault (MV), said composition engine (CE) and said media session annonation server (MSAS) are part of said network, said user (U1 ; U2; U3) being adapted to provide said media session annotation server (MSAS) with said content and with said multimedia stream and to send out a control signal to control said media session annotation server (MSAS) in correlating said content with said multimedia stream.

2. System according to claim 1, **characterized in that** said system in addition includes an Audio/Video reflector (A/Vr) also being part of said network, said user entity (U1 ; U2 ; U3) being adapted to send said content to said media session annotation server (MSAS) via said Audio/Video reflector (ANr).

3. System according to claim 1 **characerized in that** media session annotation server (MSAS) is adapted to select said content from prestored content based on said control signal.

4. System according to claim 1 **characerized in that** said multimedia stream is stored in said media vault (MV) and that said media session annotation server (MSAS) is adapted to retrieve said multimedia stream therefrom upon instructions contained in said control signal.

5. System according to claim 3, **characterized in that** said media vault is adapted to contain said prestored content.

6. System according to claim 1, **characterized in that** said correlation information at least includes a timestamp indicating where in the video stream the content belongs and a reference to said content.

7. System according to claim 1, **characterized in that** said multimedia stream, said content and said correlation information are stored in said media vault.

8. System according to claim 1, **characterized in that** said user entity (U1 ; U2 ; U3) upon receipt of said annotated multimedia stream is adapted to generate a control signal with an indication on whether or not said content has to be shown.

9. System according to any of the preceeding claims, **characterized in that** said system includes a session server (SS) also being part of said network, said session server (SS) being adapted to receive said control signal from said user, and to receive at least a second control signal from at least a second user connected to said network, said second user being adapted to send said second control signal to control said media session annotation server (MSAS) in correlating second content with said multimedia stream, said session server (SS) being adapted to combine said control signal and said second control signal to generate at least one session control signal and to send this session control signal to said media session annotation server (MSAS) to control said correlation.

10. Media session annotation server (MSAS) for use in a system according to claim 1 said media session annotation server (MSAS) being adapted to receive content and to generate correlation information to correlate said content with a multimedia .

11. Composition engine (CE) for use in a system according to claim 1 said composition engine (CE) being adapted to use correlation information to annotate a multimedia stream with content and to provide an annotated multimedia stream.

12. Session server for use in a system according to claim 9 said session server (SS) being adapted to receive a control signal from a first user of said system and to receive at least a second control signal from at least a second user of said system, said session server (SS) in addition being adapted to combine said control signal and said second control signal to generate at least one session control signal and to send this session control signal to a media session annotation server (MSAS) of said system to control correlation of content sent by either one of said first user and said second user with a multimedia stream.
